# EUROPÄISCHE PATENTANMELDUNG

(11) **EP 4 582 247 A1**
(43) Veröffentlichungstag der Anmeldung: **09.07.2025**
(21) Anmeldenummer: 24219641.8
(22) Anmeldetag: 13.12.2024
(51) Int. Cl.: B29D 30/06, B29C 33/38, B29C 33/42

(54) **VERFAHREN ZUR HERSTELLUNG EINES PROFILSEGMENTES**

(30) Priorität: 04.01.2024 DE 102024200063
(71) Anmelder: Continental Reifen Deutschland GmbH, 30175 Hannover (DE)
(72) Erfinder: Berger, Christoph, 30175 Hannover (DE); Radek, Markus, 30175 Hannover (DE); Voelker, Bert, 30175 Hannover (DE)
(74) Vertreter: Continental Corporation

(57) **Zusammenfassung**

Die Erfindung betrifft ein Verfahren zur Herstellung eines Profilsegmentes einer segmentierten Guss-Vulkanisierform für Fahrzeugreifen, wobei die Formfläche des Profilsegments ein Segment des Laufstreifenprofils eines zu vulkanisierenden Reifens formt.

## Beschreibung

Die Erfindung betrifft ein Verfahren zur Herstellung eines Profilsegmentes einer segmentierten Vulkanisierform für Fahrzeugreifen, dessen Formfläche ein Segment des Laufstreifenprofils eines zu vulkanisierenden Reifens formt.

Weiterhin betrifft die Erfindung ein Profilsegment mit Veränderungen des Oberflächenprofils eines Teilbereichs des Profilsegments, sowie einen Fahrzeugreifen.

Vulkanisierformen für Reifen bestehen unter anderem aus Formteilen, welche gemeinsam die radial äußere Oberfläche des Reifens wie den Laufstreifen, den Schulterbereich, die Seitenwände und den Wulstbereich formen. Die Segmente, welche den Laufstreifen formen, werden Profil- oder Formsegmente genannt.

Der Begriff "Profilpositiv" umfasst sämtliche Einschnitte des Profils sowie mögliche weitere Einschnitte, wie solche für das Einsetzen von Lamellenblechen für PKW- und Vanreifen.

Der unvulkanisierte grüne Reifenrohling wird in der Vulkanisierform vulkanisiert und durch Kautschukvernetzungsreaktionen in seinen endgültigen gummielastischen Zustand überführt. Dabei erhält der Reifen seine Profilgestaltung durch die entsprechende Negativgestaltung der Formflächen der Formsegmente.

Unter Formflächen sind diejenigen Flächen der Formsegmente gemeint, die dem Reifenrohling seine entsprechende Gestaltung geben.

Für die Reifenperformance, insbesondere für die Schnee- und Eisperformance von Winterreifen ist es vorteilhaft, wenn die mantelförmige Oberfläche des Reifenlaufstreifens, das Oberflächenprofil des Fahrzeugreifens, eine definierte Rauigkeit aufweist. Die Rillen des Laufstreifenprofiles, welche die erhabenen Profilelemente begrenzen, sollen hingegen möglichst "glatt" sein, um dem Reifen eine hohe Qualitätsanmutung zu verleihen.

Es ist aus der EP 3 261 830 B1 bekannt, dass feine Strukturen, die mittels Plasmabeschichtung auf ein Modellsegment aufgebracht werden, vorteilhaft für die Haftung eines damit hergestellten Fahrzeugreifens bei winterlichen Bedingungen sind.

Es ist daher die Aufgabe der Erfindung, ein kostengünstiges sowie anpassungsfähiges Verfahren zur Herstellung eines Profilsegmentes, sowie ein Profilsegment, einer segmentierten Vulkanisierform für Fahrzeugreifen zur Verfügung zu stellen, mit welchen die mantelförmige Laufstreifenoberfläche eines zu vulkanisierenden Reifens mit einer definierten Rauigkeit beziehungsweise einem definierten Oberflächenprofil zu versehen ist. Weiterhin ist es eine Aufgabe der Erfindung einen Fahrzeugreifen mit einem derartigen Oberflächenprofil bereitzustellen.

Diese Aufgabe wird gelöst mit einem Verfahren gemäß den Merkmalen des Patentanspruches 1 sowie einem Profilsegment und einem Fahrzeugreifen gemäß den nebengeordneten Ansprüchen. Die Unteransprüche betreffen besonders zweckmäßige Weiterbildungen der Erfindung.

Erfindungsgemäß ist also ein Verfahren zur Herstellung eines Profilsegmentes einer segmentierten Guss-Vulkanisierform für Fahrzeugreifen, wobei die Formfläche des Profilsegments ein Segment des Laufstreifenprofils eines zu vulkanisierenden Reifens formt, mit folgenden Schritten:
a) Erstellen eines starren Modellsegmentes, welches eine mantelförmige Laufstreifenoberfläche aufweist,
b) Fräsen des Profilpositivs des Laufstreifens in die mantelförmige Laufstreifenoberfläche des Modellsegmentes zum Erzeugen eines Urmodells, wobei das Urmodell zumindest in einem Teilbereich ein zu veränderndes Oberflächenprofil aufweist,
c) Erstellen eines flexiblen Abdruckes aus vorzugsweise Silikonkautschuk von dem Urmodell,
d) Erstellen eines starren Abgusses aus vorzugsweise Gips von dem Abdruck aus vorzugsweise Silikonkautschuk zur Bildung eines Gießkernsegmentes,
e) Abgießen aller ringkreisförmiger aneinandergesetzter Gießkernsegmente, bevorzugt mit einer Aluminium-Magnesium-Legierung, zum Erhalt einer Vulkanisierform, welche anschließend in einzelne Profilsegmente geteilt wird, dadurch gekennzeichnet, dass
das Oberflächenprofil des Urmodells derart durch ein Abtragen mittels Laserstrahlung verändert wird, dass es eine mittlere arithmetische Höhe (Sa) von größer 5 µm und kleiner 100 µm nach ISO 25178 aufweist.

Unter einem Teilbereich des Oberflächenprofils wird sowohl ein Bereich genau eines Profilblocks verstanden sowie ein Bereich eines jeden Profilblocks. Der Teilbereich kann sich auch über das gesamte Oberflächenprofil erstrecken, wobei unter Oberflächenprofil der Bereich eines Profilsegmentes verstanden wird, der das Fahrzeugreifen-Oberflächenprofil des Fahrzeugreifens ausbildet.

Es hat sich gezeigt, dass ein Verändern des Oberflächenprofils von Modellsegmenten mittels Laserstrahlung auf eine bestimmte Rauigkeit Fahrzeugreifen ermöglicht, die den Zielkonflikt zwischen Trockenhaftung und Schnee- beziehungsweise Eishaftung auf einem höherem Niveau lösen. Dies wird darauf zurückgeführt, dass bei einer, insbesondere für Trockenhaftung relevanten, großen Kontaktfläche zwischen dem Fahrzeugreifen und dem Untergrund auch ein ausreichender Negativanteil bereitgestellt wird, der derartig anordbar ist, dass bei Schnee- beziehungsweise Eishaftung eine hohe Haftung erreicht wird. Hierbei hat sich gezeigt, dass derartige Rauigkeiten in Modellsegmenten mittels Laserstrahlung in besonders einfacher und kosteneffizienter weise herstellbar sind. Weiterhin hat sich gezeigt, dass das Abtragen mittels Laserstrahlung besonders viele Freiheiten bei der Gestaltung des Oberflächenprofils ermöglicht. Es sind beispielweise in unterschiedlichen Bereichen der Laufstreifenoberfläche unterschiedliche Oberflächenprofile erzeugbar.

Eine bevorzugte Ausführungsform sieht vor, dass die Veränderung des Oberflächenprofils in Schritt b) mittels Laserschneiden oder Laserbohren erzeugt wird. Ein mittels Laserstrahlung durchgeführtes abtragendes Verfahren ermöglicht in besonders einfacher Weise eine Vielzahl von Strukturen und Oberflächenrauheiten unterschiedlicher Art und Weise herzustellen, wobei bevorzugt nur Teilflächen eines jeden Modellsegmentes bearbeitet werden.

Eine weitere bevorzugte Ausführungsform sieht vor, dass in Schritt b) eine Strukturgröße von kleiner als 0,1 mm × 0,1 mm, insbesondere ein Oberflächenprofil Sa von größer als 10 µm, vorzugsweise von größer als 15 µm, und beziehungsweise oder von kleiner als 80 µm, vorzugsweise von kleiner als 60 µm, erzeugt wird. Es hat sich gezeigt, dass kleine Strukturgrößen, insbesondere Oberflächenprofile Sa von größer als 10 µm sowie kleiner als 80 µm bei einer besonders guten Trockenhaftung zu besonders guten Werten hinsichtlich Schneebeziehungsweise Eishaftung führen.

Eine weitere bevorzugte Ausführungsform sieht vor, dass in Schritt b) ein Ssk-Wert nach ISO 25178 von größer als -10, vorzugsweise von größer als -5, weiter bevorzugt von größer als -3 und/oder von kleiner als 50, vorzugsweise von kleiner als 30, weiter bevorzugt von kleiner als 20 sowie bevorzugt einen Sku-Wert nach ISO 25178 von ≥ 3, erzeugt wird. Es hat sich gezeigt, dass die bevorzugten Ssk-Werte, also das Erzeugen von Höhenverteilungen, die oberhalb der mittleren Ebenen sind, die auch als Vertiefungen in einer Ebene beschrieben werden, bei einer besonders guten Trockenhaftung zu besonders guten Werten hinsichtlich Schnee- beziehungsweise Eishaftung führen.

Eine weitere bevorzugte Ausführungsform sieht vor, dass in Schritt b) die Oberflächenrauheiten Sa, Ssk und/oder Sku von der Schulterzone hin zum Äquator und beziehungsweise oder auf jeweils einem Profilklotz in Umfangsrichtung unterschiedlich ausgebildet werden. Eine unterschiedliche Ausbildung der Oberflächenrauheiten vom Äquator, also der mittig zwischen den Schulterbereichen angeordneten Laufstreifenoberfläche, und den Schulterzonen ermöglicht es in den unterschiedlichen lateralen Bereichen des Laufstreifens eine Oberflächenrauheit zu erzeugen, die für ihre überwiegenden Funktionen besonders geeignet sind. Eine besonders effektive Haftung in Umfangsrichtung sowie in lateraler Richtung wird ermöglicht. Auch die überwiegenden Funktionen eines Profilklotzes, die über die Umfangsrichtung variabel sind, können somit optimiert werden.

Eine weitere bevorzugte Ausführungsform sieht vor, dass in Schritt b) die Oberflächenrauheiten Sa, Ssk und beziehungsweise oder Sku in Form eines definierten Musters, bevorzugt mittels Punktmatrix oder vektorieller Schraffur, erzeugt werden. Es hat sich gezeigt, dass eine Anordnung der Oberflächenrauheiten sowohl in Form einer Punktmatrix als auch einer vektoriellen Schraffur, insbesondere mittels Punktmatrix oder vektorieller Schraffur, vorteilhaft sein können hinsichtlich einer Lösung des genannten Zielkonfliktes auf einem höherem Niveau.

Eine weitere bevorzugte Ausführungsform sieht vor, dass als Laserstrahlung eine Kurzpulslaserstrahlung oder eine Ultrakurzpulslaserstrahlung verwendet wird und bevorzugt gezielte Bohrungen erzeugt werden. Es hat sich gezeigt, dass Kurzpulslaserstrahlung sowie Ultrakurzpulslaserstrahlung besonders geeignet sind, um ein besonders geeignetes Oberflächenprofil und insbesondere gezielte Bohrungen zu erzeugen, wobei unter Bohrungen Sackbohrungen verstanden werden, die einen zumindest grob angenähert kreisförmigen Querschnitt aufweisen.

Eine weitere bevorzugte Ausführungsform sieht vor, dass das Abtragen des Oberflächenprofils mittels Laserstrahlung durch mehrfache Überfahrten mit der Laserstrahlung durchgeführt wird, wobei die Fokuslage der Laserstrahlung bevorzugt zwischen den Überfahrten und beziehungsweise oder während einer jeden Überfahrt verändert wird. Hierdurch wird in einfacher und effizienter Weise das Erzeugen eines geeigneten Oberflächenprofils ermöglicht.

Erfindungsgemäß ist ein Profilsegment einer segmentierten Vulkanisierform für Fahrzeugreifen vorgesehen, wobei die Formfläche des Profilsegments ein Segment des Laufstreifenprofils eines zu vulkanisierenden Reifens formt, bevorzugt hergestellt mittels eines erfindungsgemäßen Verfahrens, wobei das Profilsegment zumindest einen Teilbereiche aufweist, wobei der zumindest eine Teilbereich ein verändertes Oberflächenprofil aufweist, das aus dem Abtragen mittels Laserstrahlung des Urmodells resultiert, wobei das Oberflächenprofil des Urmodells derart durch ein Abtragen mittels Laserstrahlung verändert wird, dass das Profilsegment eine mittlere arithmetische Höhe (Sa) von größer 5 µm und kleiner 100 µm nach ISO 25178 aufweist.

Es hat sich gezeigt, dass ein Oberflächenprofil von Profilsegmenten mit einer Rauigkeit mit einer mittleren arithmetischen Höhe (Sa) von größer 5 µm und kleiner 100 µm, die durch Abtragen des Urmodells mittels Laserstrahlung und darauffolgendem Abformen erzeugt wurden, Fahrzeugreifen ermöglichen, die den Zielkonflikt zwischen Trockenhaftung und Schnee- beziehungsweise Eishaftung auf einem höherem Niveau lösen.

Erfindungsgemäß ist ein Fahrzeugreifen vorgesehen, bevorzugt hergestellt mit einem erfindungsgemäßen Verfahren und beziehungsweise oder hergestellt mit einem erfindungsgemäßen Profilsegment, wobei der Fahrzeugreifen zumindest einen Teilbereiche mit einem Fahrzeugreifen-Oberflächenprofil aufweist, wobei das Fahrzeugreifen-Oberflächenprofil eine mittlere arithmetischen Höhe (Sa) von größer 5 µm und kleiner 100 µm nach ISO 25178 aufweist.

Es hat sich gezeigt, dass ein Fahrzeugreifen mit einer Rauigkeit mit einer mittleren arithmetischen Höhe (Sa) von größer 5 µm und kleiner 100 µm den Zielkonflikt zwischen Trockenhaftung und Schnee- beziehungsweise Eishaftung auf einem höherem Niveau lösen kann.

Eine bevorzugte Ausführungsform sieht vor, dass das Fahrzeugreifen-Oberflächenprofil eine Strukturgröße von kleiner als 0,1 mm × 0,1 mm, insbesondere ein Fahrzeugreifen-Oberflächenprofil Sa von größer als 10 µm, vorzugsweise von größer als 15 µm, und beziehungsweise oder von kleiner als 80 µm, vorzugsweise von kleiner als 60 µm, aufweist. Es hat sich gezeigt, dass kleine Strukturgrößen, insbesondere Fahrzeugreifen-Oberflächenprofile Sa von größer als 10 µm sowie kleiner als 80 µm bei einer besonders guten Trockenhaftung zu besonders guten Werten hinsichtlich Schnee- beziehungsweise Eishaftung führen.

Eine weitere bevorzugte Ausführungsform sieht vor, dass die Oberflächenrauheiten Sa, Ssk und beziehungsweise oder Sku des Fahrzeugreifen-Oberflächenprofils von der Schulterzone hin zum Äquator und beziehungsweise oder auf jeweils einem Profilklotz in Umfangsrichtung unterschiedlich ausgebildet sind. Eine unterschiedliche Ausbildung der Oberflächenrauheiten vom Äquator, also der mittig zwischen den Schulterbereichen angeordneten Laufstreifenoberfläche, und den Schulterzonen ermöglicht es in den unterschiedlichen lateralen Bereichen des Laufstreifens eine Oberflächenrauheit zu erzeugen, die für ihre überwiegenden Funktionen besonders geeignet sind. Eine besonders effektive Haftung in Umfangsrichtung sowie in lateraler Richtung wird ermöglicht. Auch die überwiegenden Funktionen eines Profilklotzes, die über die Umfangsrichtung variabel sind, können somit optimiert werden.

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigt in
- Fig. 1: Umfangsabschnitt eines erfindungsgemäßen Fahrzeugreifens für PKW in Schnittdarstellung mit einer Schnittebene, die die Reifenachse beinhaltet, perspektivisch dargestellt,
- Fig. 2: Querschnitte von Oberflächenprofilen.

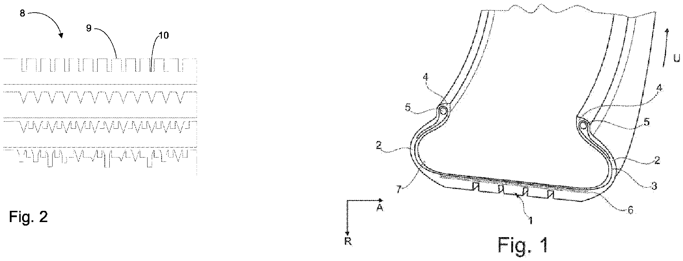

Die Figur 1 zeigt einen schlauchlosen Fahrzeugreifen radialer Bauart eines Pkw mit einem von Reifenschulter zu Reifenschulter erstreckten profilierten Laufstreifen 1. Ausgehend von der Reifenschulter ist dabei jeweils in radialer Richtung R nach innen eine Reifenseitenwand 2 erstreckt ausgebildet. Der profilierte Laufstreifen 1 und die Reifenseitenwände 2 sind jeweils in Umfangsrichtung U des Fahrzeugreifens über den gesamten Umfang des Fahrzeugreifens erstreckt ausgebildet. Die Reifenseitenwand 2 ist jeweils an ihrem radial inneren Ende mit einem Wulstbereich 4 zum Sitz auf der Felge ausgebildet. Im Wulstbereich 4 ist jeweils ein über den gesamten Umfang des Fahrzeugreifens erstreckt ein konzentrisch zur Reifenachse ausgebildeter zugfester Wulstkern 5 ausgebildet. In bekannter Weise erstreckt sich ausgehend von dem einem Wulstkern 5 in radialer Richtung R nach außen durch die Reifenseitenwand 2 hindurch bis zum profilierten Laufstreifen 1, dann in axialer Verlängerung durch den Erstreckungsbereich des profilierten Laufstreifens 1 hindurch bis zur anderen Reifenschulter und von dort in radialer Richtung R nach innen durch die zweite Reifenseitenwand 2 bis zum im zweiten Wulstbereich 4 ausgebildeten Wulstkern 5 eine Karkasse 3 radialer Bauart. Die Karkasse 3 ist in bekannter Weise aus einer oder mehreren Lagen von in Gummi eingebetteten Karkasskorden ausgebildet. Radial außerhalb der Karkasse 3 ist zwischen Karkasse 3 und profiliertem Laufstreifen 1 in bekannter Weise ein Gürtel 6 aus mehreren Gürtellagen bekannter Art ausgebildet, welcher sich über den gesamten Umfang des Fahrzeugreifens erstreckt und in axialer Richtung A von Reifenschulter zu Reifenschulter erstreckt. Die Gürtellagen sind aus in Gummi eingebetteten Festigkeitsträgern - beispielsweise Stahlkorden oder anderen für den Gürtel als geeignet bekannten Festigkeitsträgern - ausgebildet.

Auf der zum Reifeninneren hin gerichteten Innenseite der Karkasse 3 erstreckt sich in bekannter Weise ausgehend vom einen Wulstbereich 4 entlang der Reifenseitenwand 2 nach radial außen bis zur Reifenschulter, dann in axialer Verlängerung von dieser ersten Reifenschulter zur zweiten Reifenschulter und von dort in radialer Richtung nach innen entlang der zweiten Reifenseitenwand bis zum zweiten Wulstbereich 4 eine aus besonders luftdichtem Gummimaterial ausgebildete Reifeninnenschicht 7. Die Reifeninnenschicht 7 erstreckt sich in Umfangsrichtung U über den gesamten Umfang des Fahrzeugreifens.

In Figur 2 sind Querschnitte von Oberflächenprofilen 8 dargestellt, die eine Höhendifferenz von den höchsten Punkten 9 zu den tiefsten Punkten 10 von 20 µm bis 30 µm aufweisen. Die Oberflächenprofile 8 können wie dargestellt eine rechteckige oder dreieckförmige Geometrie aufweisen sowie Kombinationen aus diesen Grundgeometrien. Die Breiten zu Tiefenverhältnisse sowie die Abstände der einzelnen Vertiefungen können hierbei variieren.

## Patentansprüche

1. Verfahren zur Herstellung eines Profilsegmentes einer segmentierten Guss-Vulkanisierform für Fahrzeugreifen, wobei die Formfläche des Profilsegments ein Segment des Laufstreifenprofils eines zu vulkanisierenden Reifens formt, mit folgenden Schritten:
a) Erstellen eines starren Modellsegmentes, welches eine mantelförmige Laufstreifenoberfläche aufweist,
b) Fräsen des Profilpositivs des Laufstreifens (1) in die mantelförmige Laufstreifenoberfläche des Modellsegmentes zum Erzeugen eines Urmodells, wobei das Urmodell zumindest in einem Teilbereich ein zu veränderndes Oberflächenprofil (8) aufweist,
c) Erstellen eines flexiblen Abdruckes aus vorzugsweise Silikonkautschuk von dem Urmodell,
d) Erstellen eines starren Abgusses aus vorzugsweise Gips von dem Abdruck aus vorzugsweise Silikonkautschuk zur Bildung eines Gießkernsegmentes,
e) Abgießen aller ringkreisförmiger aneinandergesetzter Gießkernsegmente, bevorzugt mit einer Aluminium-Magnesium-Legierung, zum Erhalt einer Vulkanisierform, welche anschließend in einzelne Profilsegmente geteilt wird, **dadurch gekennzeichnet, dass**
das Oberflächenprofil (8) des Urmodells derart durch ein Abtragen mittels Laserstrahlung verändert wird, dass es eine mittlere arithmetische Höhe (Sa) von größer 5 µm und kleiner 100 µm nach ISO 25178 aufweist.

2. Verfahren nach Anspruch 1, **dadurch gekennzeichnet, dass** die Veränderung des Oberflächenprofils (8) in Schritt b) mittels Laserschneiden oder Laserbohren erzeugt wird.

3. Verfahren nach den Ansprüchen 1 oder 2, **dadurch gekennzeichnet, dass** in Schritt b) eine Strukturgröße von kleiner als 0,1 mm × 0,1 mm, insbesondere ein Oberflächenprofil (8) Sa von größer als 10 µm, vorzugsweise von größer als 15 µm, und/oder von kleiner als 80 µm, vorzugsweise von kleiner als 60 µm, erzeugt wird.

4. Verfahren nach einem der vorangehenden Ansprüche, **dadurch gekennzeichnet, dass** in Schritt b) ein Ssk-Wert nach ISO 25178 von größer als -10, vorzugsweise von größer als -5, weiter bevorzugt von größer als -3 und/oder von kleiner als 50, vorzugsweise von kleiner als 30, weiter bevorzugt von kleiner als 20 sowie bevorzugt einen Sku-Wert nach ISO 25178 von ≥ 3, erzeugt wird.

5. Verfahren nach einem der vorangehenden Ansprüche, **dadurch gekennzeichnet, dass** in Schritt b) die Oberflächenrauheiten Sa, Ssk und/oder Sku von der Schulterzone hin zum Äquator und/oder auf jeweils einem Profilklotz in Umfangsrichtung unterschiedlich ausgebildet werden.

6. Verfahren nach einem der vorangehenden Ansprüche, **dadurch gekennzeichnet, dass** in Schritt b) die Oberflächenrauheiten Sa, Ssk und/oder Sku in Form eines definierten Musters, bevorzugt mittels Punktmatrix oder vektorieller Schraffur, erzeugt werden.

7. Verfahren nach einem der vorangehenden Ansprüche, **dadurch gekennzeichnet, dass** als Laserstrahlung eine Kurzpulslaserstrahlung oder eine Ultrakurzpulslaserstrahlung verwendet wird und bevorzugt gezielte Bohrungen erzeugt werden.

8. Verfahren nach einem der vorangehenden Ansprüche, **dadurch gekennzeichnet, dass** das Abtragen des Oberflächenprofils (8) mittels Laserstrahlung durch mehrfache Überfahrten mit der Laserstrahlung durchgeführt wird, wobei die Fokuslage der Laserstrahlung bevorzugt zwischen den Überfahrten und/oder während einer jeden Überfahrt verändert wird.

9. Profilsegment einer segmentierten Vulkanisierform für Fahrzeugreifen, wobei die Formfläche des Profilsegments ein Segment des Laufstreifenprofils eines zu vulkanisierenden Reifens formt, bevorzugt hergestellt mittels eines Verfahrens nach einem der vorhergehenden Ansprüche, wobei das Profilsegment zumindest einen Teilbereiche aufweist,
wobei der zumindest eine Teilbereich ein verändertes Oberflächenprofil (8) aufweist, das aus dem Abtragen mittels Laserstrahlung des Urmodels resultiert, wobei das Oberflächenprofil (8) des Urmodells derart durch ein Abtragen mittels Laserstrahlung verändert wird, dass das Profilsegment eine mittlere arithmetische Höhe (Sa) von größer 5 µm und kleiner 100 µm nach ISO 25178 aufweist.

10. Fahrzeugreifen, bevorzugt hergestellt mit einem Verfahren nach einem der Ansprüche 1 bis 8 und/oder hergestellt mit einem Profilsegment nach Anspruch 9, wobei der Fahrzeugreifen zumindest einen Teilbereich mit einem Fahrzeugreifen-Oberflächenprofil aufweist,
wobei das Fahrzeugreifen-Oberflächenprofil eine mittlere arithmetischen Höhe (Sa) von größer 5 µm und kleiner 100 µm nach ISO 25178 aufweist.

11. Fahrzeugreifen nach Anspruch 10, **dadurch gekennzeichnet, dass** das Fahrzeugreifen-Oberflächenprofil eine Strukturgröße von kleiner als 0,1 mm × 0,1 mm, insbesondere ein Fahrzeugreifen-Oberflächenprofil Sa von größer als 10 µm, vorzugsweise von größer als 15 µm, und/oder von kleiner als 80 µm, vorzugsweise von kleiner als 60 µm, aufweist.

12. Fahrzeugreifen nach einem der Ansprüche 10 bis 11, **dadurch gekennzeichnet, dass** die Oberflächenrauheiten Sa, Ssk und/oder Sku des Fahrzeugreifen-Oberflächenprofils von der Schulterzone hin zum Äquator und/oder auf jeweils einem Profilklotz in Umfangsrichtung unterschiedlich ausgebildet sind.
